# EUROPEAN PATENT APPLICATION

(11) **EP 4 465 610 A1**
(43) Date of publication of application: **20.11.2024**
(21) Application number: 23778031.7
(22) Date of filing: 24.03.2023
(51) Int. Cl.: H04L 45/50

(54) **DETERMINISTIC SERVICE METHOD FOR REALIZING NETWORK UNDERLYING RESOURCE AWARENESS, AND ELECTRONIC DEVICE AND COMPUTER-READABLE STORAGE MEDIUM**

(30) Priority: 29.03.2022 CN 202210323054
(71) Applicant: ZTE Corporation, Shenzhen, Guangdong 518057 (CN)
(72) Inventor: SONG, Xueyan, Shenzhen, Guangdong 518057 (CN); PENG, Shaofu, Shenzhen, Guangdong 518057 (CN)
(74) Representative: Canzler & Bergmeier Patentanwälte Partnerschaft mbB
(86) International application number: PCT/CN2023/083598
(87) International publication number: WO 2023/185662

(57) **Abstract**

Provided in the present application are a deterministic service method for realizing network underlying resource awareness, and an electronic device and a computer-readable storage medium. The deterministic service method for realizing network underlying resource awareness comprises: acquiring a network slice label corresponding to a deterministic service message, wherein the network slice label corresponding to the deterministic service message is a network slice label that has a first mapping relationship with a network slice identifier corresponding to the deterministic service message, and the network slice identifier corresponding to the deterministic service message is a network slice identifier that has a second mapping relationship with a deterministic service flow or a deterministic service aggregation flow to which the deterministic service message belongs; according to the network slice label corresponding to the deterministic service message, determining a network underlying resource which is reserved, in advance, for a network slice corresponding to the network slice label; and performing resource occupation processing on the network underlying resource.

## Description

### CROSS-REFERENCE TO RELATED APPLICATIONS

The present application claims the priority of Chinese Patent Application No. 202210323054.6, filed on March 29, 2022, the contents of which are incorporated herein in their entirety by reference.

### TECHNICAL FIELD

Embodiments of the present application relate to the field of communication technologies, and in particular, to a deterministic service method for realizing network underlying resource awareness, an electronic device, and a computer-readable storage medium.

### BACKGROUND

Deterministic Networking (DetNet) provides services having ultra-low packet loss rates and guarantying end-to-end delivery delays to most extent for specific unicast or multicast data streams in real-time application scenarios. In Internet Engineering Task Force (IETF) [RFC8655], deterministic services for guarantying performance such as delays and packet loss rates of the unicast or multicast data streams are realized through a Packet Replication Elimination Ordering Function (PREOF). DetNet assumes that a management controller can complete a selection of paths of resources desired by the deterministic services, but the related arts have not yet provided any effective solution to solve how to provide guarantee of network underlying resources which meet low delays and low packet loss rates.

### SUMMARY

In a first aspect, embodiments of the present application provide a deterministic service method for realizing network underlying resource awareness, including: acquiring a network slice label corresponding to a deterministic service packet; the network slice label corresponding to the deterministic service packet is a network slice label having a first mapping relation with a network slice identifier corresponding to the deterministic service packet, and the network slice identifier corresponding to the deterministic service packet is a network slice identifier having a second mapping relation with a deterministic service flow or a deterministic service aggregation flow to which the deterministic service packet belongs; determining network underlying resources pre-reserved for a network slice corresponding to the network slice label according to the network slice label corresponding to the deterministic service packet; and performing resource occupation processing on the network underlying resources for occupying the network underlying resources.

In a second aspect, embodiments of the present application provide an electronic device, including: at least one processor; and a memory having at least one computer program stored thereon, the at least one computer program, executed by the at least one processor, causes the at least one processor to implement the deterministic service method for realizing network underlying resource awareness described above.

In a third aspect, embodiments of the present application provide a computer-readable storage medium having a computer program stored thereon, the computer program, executed by a processor, causes the processor to implement the deterministic service method for realizing network underlying resource awareness described above.

### BRIEF DESCRIPTION OF DRAWINGS

Fig. 1 is a schematic diagram of a data plane encapsulation format of a DetNet-flow MPLS packet defined in IETF RFC8964 according to the present application.
Fig. 2 is a schematic diagram of a data plane encapsulation format of a DetNet-flow aggregation MPLS packet defined in IETF RFC8964 according to the present application.
Fig. 3 is a flowchart of a deterministic service method for realizing network underlying resource awareness according to the present application.
Fig. 4 is a schematic diagram of a data plane encapsulation format of a deterministic service packet according to the present application.
Fig. 5 is a schematic diagram of a data plane encapsulation format of a deterministic service packet according to the present application.
Fig. 6 is a schematic diagram of a data plane encapsulation format of a deterministic service packet according to the present application.
Fig. 7 is a schematic diagram of a data plane encapsulation format of a deterministic service packet according to the present application.
Fig. 8 is a block diagram of a deterministic service apparatus for realizing network underlying resource awareness according to the present application.

### DETAIL DESCRIPTION OF EMBODIMENTS

In order to make those skilled in the art better understand the technical solutions of the present application, a deterministic service method for realizing network underlying resource awareness, an electronic device, and a computer-readable storage medium, provided in the present application, are described in detail below with reference to the accompanying drawings.

Exemplary embodiments are described in detail below with reference to the accompanying drawings, but the exemplary embodiments may be embodied in different forms, and the present application should not be construed as limited to the embodiments set forth herein. The embodiments are illustrated to make the present application more thorough and complete, and for those skilled in the art more fully understanding the scope of the present application.

The embodiments of the present application and the technical features in the embodiments may be combined with each other if no conflict is incurred.

As used in the present application, a term "and/or" includes any and all combinations of at least one of listed items.

The terms used in the present disclosure are for a purpose of describing particular embodiments only, and are not intended to limit the present disclosure. As used in the present application, singular forms "a" and "the" include plural forms as well, i.e., to indicate at least one, unless the context clearly defines otherwise. It should further be understood that terms "includes/comprises" and/or "made of/consisted of" in the present application are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present application, and should not be construed as having an idealized or over-formal meaning, unless expressly defined in the present application.

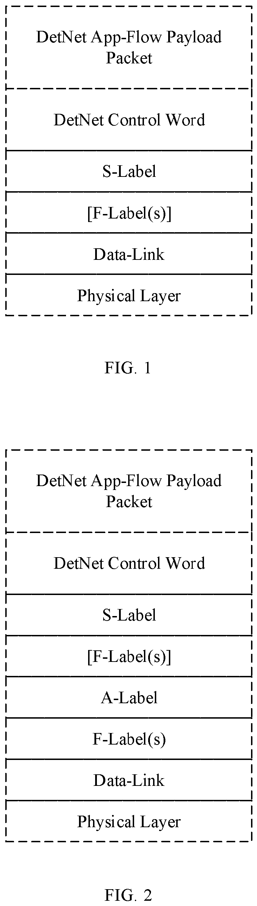

A data plane encapsulation format of a DetNet-flow Multi-Protocol Label Switching (MPLS) (DetNet-flow MPLS) packet defined in IETF RFC8964 is shown in Fig. 1, and data plane encapsulation information of the DetNet-flow MPLS packet includes: a DetNet Control Word (d-CW), a service label (S-Label), and a forwarding label (F-Label).

The d-CW is configured for replication and duplication elimination of data packets, and is configured to identify a DetNet service flow or a DetNet service aggregation flow, and sequence number information corresponding to the DetNet service flow or the DetNet service aggregation flow.

The S-Label is configured to identify a DetNet flow received from an upstream DetNet service sub-layer processing node in a path.

The F-Label is optional. One or more F-Labels may be configured, or the packet may not include the F-Label. The F-Label is configured to direct the data packet, along a Label Switched Path (LSP), to a next DetNet service sub-layer processing node in the path.

A data plane encapsulation format of a DetNet aggregation flow MPLS (DetNet-flow aggregation MPLS) packet defined in IETF RFC8964 is shown in Fig. 2, and data plane encapsulation information of the DetNet-flow aggregation MPLS packet includes: a d-CW of a single flow, an S-Label of the single flow, an F-Label of the single flow, an aggregation label (A-Label), a d-CW of an aggregation flow, and an F-Label of the aggregation flow.

The d-CW of the single flow is configured for replication and duplication elimination of data packets of the single flow, and is configured to identify a DetNet service flow and sequence number information corresponding to the DetNet service flow.

The S-Label of the single flow is configured to identify a DetNet flow received from an upstream DetNet service sub-layer processing node in a path.

The F-Label of the single flow is optional. One or more F-Labels of the single flow may be configured, or the packet may not include the F-Label of the single flow. The F-Label of the single flow is configured to direct the data packet of the single flow, along the LSP, to a downstream DetNet service sub-layer processing node in the path.

The d-CW of the aggregation flow is configured for replication and duplication elimination of data packets of the aggregation flow, and is configured to identify a DetNet service aggregation flow and sequence number information corresponding to the DetNet service aggregation flow.

The A-Label is configured to identify a DetNet aggregation flow received from the upstream DetNet service sub-layer processing node in the path.

One or more F-Labels of the aggregation flow may be configured. The F-Label of the aggregation flow is configured to direct the data packet of the aggregation flow, along the LSP, to the downstream DetNet service sub-layer processing node in the path.

The A-Label and the S-Label of the single flow are respectively configured with corresponding MPLS S bits for indicating bottoms of stacks, and allow PREOF to operate by configuring the d-CW, and the A-Label is a special example of the S-Label and is only processed at an aggregation end point or a de-aggregation end point.

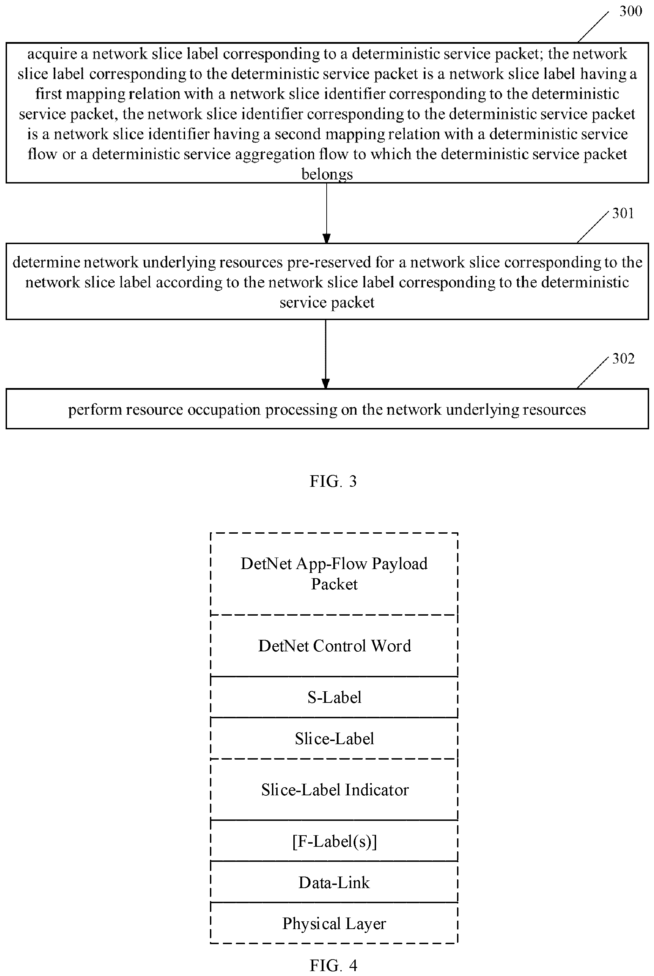

Fig. 3 is a flowchart of a deterministic service method for realizing network underlying resource awareness according to the present application.

In a first aspect, referring to Fig. 3, the present application provides a deterministic service method for realizing network underlying resource awareness, including operations 300 to 302.

At operation 300, acquiring a network slice label corresponding to a deterministic service packet; the network slice label corresponding to the deterministic service packet is a network slice label having a first mapping relation with a network slice identifier corresponding to the deterministic service packet, the network slice identifier corresponding to the deterministic service packet is a network slice identifier having a second mapping relation with a deterministic service flow or a deterministic service aggregation flow to which the deterministic service packet belongs.

In some implementations, the second mapping relation may be a mapping relation between an identifier of the deterministic service flow and the network slice identifier, or a mapping relation between an identifier of the deterministic service aggregation flow and the network slice identifier.

In some implementations, the network slice may be an IETF network slice, or a network slice defined in the 3rd Generation Partnership Project (3GPP), or other network slices defined in the future. For example, according to the description of 3GPP TS 23.501 V17.3.0, due to proliferation of expectations of customers on 5G new business services, based on a difference between service expectations of Service Level Agreement (SLA) of business, five types of Slice/service type (SST) to be supported are defined to include enhanced Mobile Broadband (eMBB), ultra-Reliable Low Latency Communications (uRLLC), massive IoT (mIoT), Vehicle to X (V2X), and High-Performance Machine-Type Communications (HMTC), operators may provide customized network slicing services for users through SST combined with Slice differentiator (SD) based on different customer service expectations.

In some implementations, in a case where a present node is a first node of a path and is a node executing the deterministic service method for realizing network underlying resource awareness according to the present application, the acquiring a network slice label corresponding to a deterministic service packet includes: searching a network slice identifier corresponding to the deterministic service flow or the deterministic service aggregation flow to which the deterministic service packet belongs in the second mapping relation; and searching a network slice label corresponding to the searched network slice identifier in the first mapping relation.

In some implementations, in a case where a present node is an intermediate node or a tail node of a path and is a node executing the deterministic service method for realizing network underlying resource awareness according to the present application, the acquiring a network slice label corresponding to a deterministic service packet includes: receiving the deterministic service packet, data plane encapsulation information of the deterministic service packet carrying a network slice label and a network slice label indicator; and decapsulating the deterministic service packet to obtain the network slice label in the data plane encapsulation information.

In some implementations, the received deterministic service packet is a packet sent by an upstream node.

In some implementations, as shown in Fig. 4, a newly added label in the data plane encapsulation information carries the network slice label, a special label in the data plane encapsulation information carries the network slice label indicator. That is, the data plane encapsulation information includes: a d-CW, an S-Label, a network slice label (Slice-Label), a special label (bSPL), and an F-Label. The bSPL carries the network slice label indicator (Slice-Label Indicator).

In some implementations, the Slice-Label is configured to indicate a network slice to which the deterministic service flow or the deterministic service aggregation flow is mapped.

In some implementations, the Slice-Label Indicator is configured to indicate that a label following the bSPL is the Slice-Label.

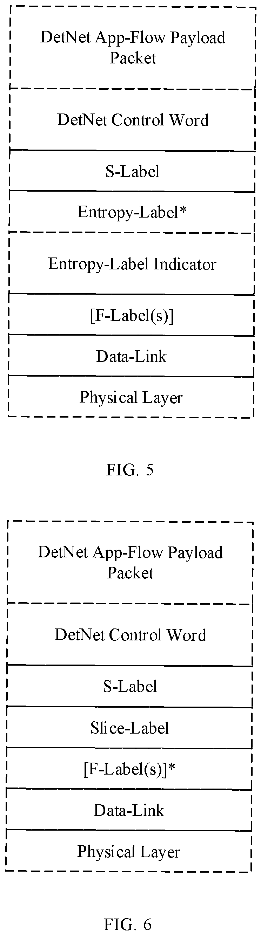

In some implementations, as shown in Fig. 5, an entropy label in the data plane encapsulation information carries the network slice label, a Time To Live (TTL) field in an entropy label indicator in the data plane encapsulation information carries the network slice label indicator. That is, the data plane encapsulation information includes: a d-CW, an S-Label, an entropy label, an entropy label indicator, and an F-Label. The entropy label carries the Slice-Label, and the TTL field in the entropy label indicator carries the Slice-Label Indicator.

In some implementations, the Slice-Label Indicator is configured to indicate that a label following the entropy label indicator is the Slice-Label.

In some implementations, as shown in Fig. 6, a newly added label in the data plane encapsulation information carries the network slice label, a newly added forwarding entry of a forwarding label in the data plane encapsulation information carries the network slice label indicator. That is, the data plane encapsulation information includes: a d-CW, an S-Label, a Slice-Label, and an F-Label. The newly added forwarding entry in the F-Label carries the Slice-Label Indicator.

In some implementations, the Slice-Label Indicator is configured to indicate that a label following the F-Label is the Slice-Label.

In some implementations, for the data plane encapsulation information of the deterministic service packet in the deterministic service aggregation flow, the Slice-Label and the Slice-Label Indicator may be carried only in information of an aggregation flow in the data plane encapsulation information, or may be carried in both information of the aggregation flow and information of a single flow in the data plane encapsulation information.

In some implementations, the Slice-Label carried in the information of the aggregation flow and the Slice-Label carried in the information of the single flow may be the same or different.

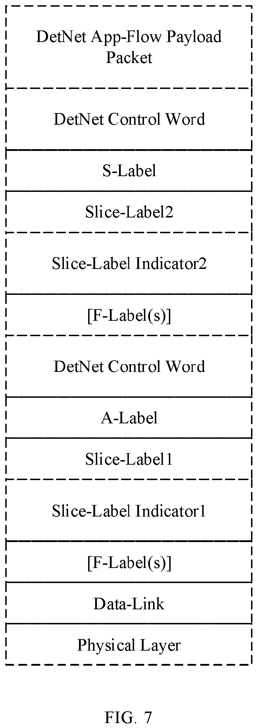

Fig. 7 shows a schematic diagram by taking that the Slice-Label is carried in both information of the aggregation flow and information of the single flow in the data plane encapsulation information as an example. As shown in Fig. 7, the information of the single flow includes: a d-CW of the single flow, an S-Label of the single flow, a network slice label (Slice-Label2) of the single flow, a bSPL of the single flow, and an F-Label of the single flow; the bSPL of the single flow carries the network slice label indicator (Slice-Label Indicator2) of the single flow; the information of the aggregation flow includes: an A-Label, a d-CW of the aggregation flow, a network slice label (Slice-Label 1) of the aggregation flow, a bSPL of the aggregation flow, and an F-Label of the aggregation flow; the bSPL of the aggregation flow carries the network slice label indicator (Slice-Label Indicator1) of the aggregation flow.

At operation 301, determining network underlying resources pre-reserved for a network slice corresponding to the network slice label according to the network slice label corresponding to the deterministic service packet.

In some implementations, the deterministic service method for realizing network underlying resource awareness further includes: before acquiring the network slice label corresponding to the deterministic service packet, receiving a resource reservation instruction issued by a management controller; the resource reservation instruction includes a network slice identifier and a Network Resource Partition (NRP) policy; reserving corresponding network underlying resources for a network slice corresponding to the network slice identifier according to the NRP policy; and storing a third mapping relation between the network slice identifier and the network underlying resources.

In some implementations, the determining network underlying resources pre-reserved for a network slice corresponding to the network slice label according to the network slice label corresponding to the deterministic service packet includes: searching the network slice identifier corresponding to the network slice label in the first mapping relation; and searching network underlying resources corresponding to the searched network slice identifier in the third mapping relation.

In some implementations, the network underlying resources include at least one of followings: queue resources, bandwidth resources, cache resources, computing resources.

In some implementations, in a case where a present node is a head node of a path, the reserving corresponding network underlying resources for a network slice corresponding to the network slice identifier according to the NRP policy includes: reserving, for the network slice corresponding to the network slice identifier, network underlying resources for a path calculation and network underlying resources for a transmission of the deterministic service packet according to the NRP policy.

In some implementations, in a case where a present node is an intermediate node of the path, the reserving corresponding network underlying resources for a network slice corresponding to the network slice identifier according to the NRP policy includes: reserving, for the network slice corresponding to the network slice identifier, network underlying resources for a transmission of the deterministic service packet according to the NRP policy.

At operation 302, performing resource occupation processing on the network underlying resources.

In some implementations, in a case where a present node is a head node of a path, the performing resource occupation processing on the network underlying resources includes: adopting the network underlying resources to perform a path calculation, and adopting the network underlying resources to transmit the deterministic service packet.

In some implementations, in a case where a present node is an intermediate node of the path, the performing resource occupation processing on the network underlying resources includes: adopting the network underlying resources to transmit the deterministic service packet.

In the deterministic service method for realizing network underlying resource awareness provided in the present application, the deterministic service is combined with the network slice, the guarantee of the network underlying resources for the deterministic services is realized based on the network slice technologies, thereby guarantying the service performance of the deterministic services.

A specific implementation process of the deterministic service method for realizing network underlying resource awareness provided in the present application is described in detail below through a specific example, the example is listed for convenience of understanding and is not used to limit the scope of the embodiments of the present application.

### Example

The deterministic service method for realizing network underlying resource awareness includes operations S1 to S8.

At operation S1, an edge node PE1 receives a resource reservation instruction issued by a management controller; the resource reservation instruction includes a network slice identifier and an NRP policy, and corresponding network underlying resources are reserved for a network slice corresponding to the network slice identifier according to the NRP policy; and a third mapping relation between the network slice identifier and the network underlying resources is stored.

In the example, a network slice label is assumed to be 1001.

At operation S2, the edge node PE1 calculates a transmission path of a deterministic service flow or a deterministic service aggregation flow according to the reserved network underlying resources, and reports the calculated transmission path to the management controller.

In the example, the calculated transmission path is assumed to start from the edge node PE1, pass through an intermediate node P1 and an intermediate node P2, and finally reach an edge node PE2.

At operation S3, the intermediate node P1, the intermediate node P2, and the edge node PE2 on the transmission path respectively receive the resource reservation instruction issued by the management controller; the resource reservation instruction includes the network slice identifier and the NRP policy.

At operation S4, the intermediate node P1, the intermediate node P2, and the edge node PE2 respectively reserve corresponding network underlying resources for the network slice corresponding to the network slice identifier according to the NRP policy; and store the third mapping relation between the network slice identifier and the network underlying resources.

At operation S5, the edge node PE1 searches for a corresponding network slice identifier in a second mapping relation according to an identifier of the deterministic service flow or an identifier of the deterministic service aggregation flow, searches for a network slice label corresponding to the searched network slice identifier in a first mapping relation, searches for network underlying resources corresponding to the searched network slice label in the third mapping relation, encapsulates a deterministic service packet of the deterministic service flow or the deterministic service aggregation flow, carries the network slice label and a network slice label indicator in data plane encapsulation information of the deterministic service packet in a process of encapsulating, and sends the encapsulated deterministic service packet to the intermediate node P1 through the reserved network underlying resources.

In the example, the identifier of the deterministic service flow or the identifier of the deterministic service aggregation flow is assumed to be 2001.

At operation S6, the intermediate node P1 receives the deterministic service packet, decapsulates the deterministic service packet to obtain the network slice label, searches for network underlying resources corresponding to the network slice label in the third mapping relation, re-encapsulates the deterministic service packet, carries the network slice label and the network slice label indicator in the data plane encapsulation information of the deterministic service packet in a process of re-encapsulating, exchanges a forwarding label, and sends the re-encapsulated deterministic service packet to the intermediate node P2 through the searched network underlying resources.

At operation S7, the intermediate node P2 receives the deterministic service packet, decapsulates the deterministic service packet to obtain the network slice label, searches for network underlying resources corresponding to the network slice label in the third mapping relation, re-encapsulates the deterministic service packet, carries the network slice label and the network slice label indicator in the data plane encapsulation information of the deterministic service packet in a process of re-encapsulating, exchanges the forwarding label, and sends the re-encapsulated deterministic service packet to the edge node PE2 through the searched network underlying resources.

At operation S8, the edge node PE2 receives the deterministic service packet, decapsulates the deterministic service packet to obtain the network slice label, searches for network underlying resources corresponding to the network slice label in the third mapping relation, re-encapsulates the deterministic service packet, pops up the forwarding label in a process of re-encapsulating, and sends the re-encapsulated deterministic service packet to a downstream node through the searched network underlying resources.

In a second aspect, the present application provides an electronic device, including: at least one processor; and a memory having at least one computer program stored thereon, the at least one computer program, executed by the at least one processor, causes the at least one processor to implement the deterministic service method for realizing network underlying resource awareness described above.

The processor is a device having a capability of processing data, includes, but is not limited to, a Central Processing Unit (CPU), and the like; the memory is a device having a capability of storing data, includes, but is not limited to, a random access memory (RAM, in particular, SDRAM, DDR, and the like), a read only memory (ROM), an electrically erasable programmable read only memory (EEPROM), and a FLASH.

In some implementations, the processor and the memory are connected together through a bus, and are further connected to other components of a computing device.

In a third aspect, the present application provides a computer-readable storage medium having a computer program stored thereon, the computer program, executed by a processor, causes the processor to implement the deterministic service method for realizing network underlying resource awareness described above.

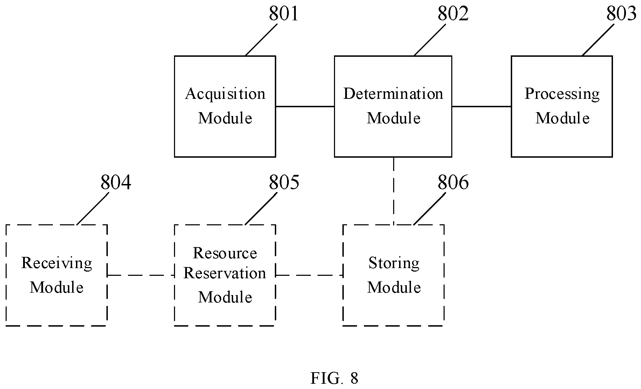

Fig. 8 is a block diagram of a deterministic service apparatus for realizing network underlying resource awareness according to the present application.

In a fourth aspect, the present application provides a deterministic service apparatus for realizing network underlying resource awareness, including: an acquisition module 801 configured to acquire a network slice label corresponding to a deterministic service packet; the network slice label corresponding to the deterministic service packet is a network slice label having a first mapping relation with a network slice identifier corresponding to the deterministic service packet, and the network slice identifier corresponding to the deterministic service packet is a network slice identifier having a second mapping relation with a deterministic service flow or a deterministic service aggregation flow to which the deterministic service packet belongs; a determination module 802 configured to determine network underlying resources pre-reserved for a network slice corresponding to the network slice label according to the network slice label corresponding to the deterministic service packet; and a processing module 803 configured to perform resource occupation processing on the network underlying resources.

In some implementations, the apparatus further includes: a receiving module 804 configured to receive a resource reservation instruction issued by a management controller; the resource reservation instruction comprises a network slice identifier and a network resource partition policy; a resource reservation module 805 configured to reserve corresponding network underlying resources for a network slice corresponding to the network slice identifier according to the network resource partition policy; and a storing module 806 configured to store a third mapping relation between the network slice identifier and the network underlying resources.

In some implementations, the determination module 802 is configured to search for the network slice identifier corresponding to the network slice label in the first mapping relation; and search for network underlying resources corresponding to the searched network slice identifier in the third mapping relation.

In some implementations, the acquisition module 801 is configured to search for a network slice identifier corresponding to the deterministic service flow or the deterministic service aggregation flow to which the deterministic service packet belongs in the second mapping relation; and search for a network slice label corresponding to the searched network slice identifier in the first mapping relation.

In some implementations, the acquisition module 801 is configured to receive the deterministic service packet, with data plane encapsulation information of the deterministic service packet carrying a network slice label and a network slice label indicator; and decapsulate the deterministic service packet to obtain the network slice label in the data plane encapsulation information.

In some implementations, a newly added label in the data plane encapsulation information carries the network slice label, a special label in the data plane encapsulation information carries the network slice label indicator.

In some implementations, an entropy label in the data plane encapsulation information carries the network slice label, a time to live (TTL) field in an entropy label indicator in the data plane encapsulation information carries the network slice label indicator.

In some implementations, a newly added label in the data plane encapsulation information carries the network slice label, a newly added forwarding entry of a forwarding label in the data plane encapsulation information carries the network slice label indicator.

The specific implementation process of the deterministic service apparatus for realizing network underlying resource awareness is the same as the specific implementation process of the deterministic service method for realizing network underlying resource awareness described above, and is not repeated herein.

It should be understood by those of ordinary skill in the art that all or some of the operations in the method, the functional modules/components in the apparatus described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present application describes the exemplary embodiments, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present application as set forth in the appended claims.

## Claims

1. A deterministic service method for realizing network underlying resource awareness, comprising:
acquiring a network slice label corresponding to a deterministic service packet; wherein, the network slice label corresponding to the deterministic service packet is a network slice label having a first mapping relation with a network slice identifier corresponding to the deterministic service packet, and the network slice identifier corresponding to the deterministic service packet is a network slice identifier having a second mapping relation with a deterministic service flow or a deterministic service aggregation flow to which the deterministic service packet belongs;
determining network underlying resources pre-reserved for a network slice corresponding to the network slice label according to the network slice label corresponding to the deterministic service packet; and
performing resource occupation processing on the network underlying resources for occupying the network underlying resources.

2. The method of claim 1, further comprising:
before acquiring the network slice label corresponding to the deterministic service packet, receiving a resource reservation instruction issued by a management controller; wherein the resource reservation instruction comprises a network slice identifier and a network resource partition policy;
reserving corresponding network underlying resources for a network slice corresponding to the network slice identifier according to the network resource partition policy; and
storing a third mapping relation between the network slice identifier and the network underlying resources.

3. The method of claim 2, wherein the determining network underlying resources pre-reserved for a network slice corresponding to the network slice label according to the network slice label corresponding to the deterministic service packet comprises:
searching for the network slice identifier corresponding to the network slice label in the first mapping relation; and
searching for network underlying resources corresponding to the searched network slice identifier in the third mapping relation.

4. The method of any one of claims 1 to 3, wherein the acquiring a network slice label corresponding to a deterministic service packet comprises:
Searching for a network slice identifier corresponding to the deterministic service flow or the deterministic service aggregation flow to which the deterministic service packet belongs in the second mapping relation; and
searching for a network slice label corresponding to the searched network slice identifier in the first mapping relation.

5. The method of any one of claims 1 to 3, wherein the acquiring a network slice label corresponding to a deterministic service packet comprises:
receiving the deterministic service packet; wherein data plane encapsulation information of the deterministic service packet carries a network slice label and a network slice label indicator; and
decapsulating the deterministic service packet to obtain the network slice label in the data plane encapsulation information.

6. The method of claim 5, wherein a newly added label in the data plane encapsulation information carries the network slice label, a special label in the data plane encapsulation information carries the network slice label indicator.

7. The method of claim 5, wherein an entropy label in the data plane encapsulation information carries the network slice label, a time to live (TTL) field in an entropy label indicator in the data plane encapsulation information carries the network slice label indicator.

8. The method of claim 5, wherein a newly added label in the data plane encapsulation information carries the network slice label, a newly added forwarding entry of a forwarding label in the data plane encapsulation information carries the network slice label indicator.

9. An electronic device, comprising:
at least one processor; and
a memory having at least one computer program stored thereon, the at least one computer program, executed by the at least one processor, causes the at least one processor to implement the deterministic service method for realizing network underlying resource awareness according to any one of claims 1 to 8.

10. A computer-readable storage medium having a computer program stored thereon, the computer program, executed by a processor, causes the processor to implement the deterministic service method for realizing network underlying resource awareness according to any one of claims 1 to 8.
